# EUROPEAN PATENT APPLICATION

(11) **EP 1 765 015 A1**
(43) Date of publication of application: **21.03.2007**
(21) Application number: 05755234.1
(22) Date of filing: 28.06.2005
(51) Int. Cl.: H04N 7/24, G06T 9/00, H04N 1/41

(54) **IMAGE ENCODING METHOD, AND IMAGE DECODING METHOD**

(30) Priority: 06.07.2004 JP 2004199801
(71) Applicant: MATSUSHITA ELECTRIC INDUSTRIAL CO., LTD., Osaka 571-8501 (JP)
(72) Inventor: KONDO, Satoshi c/o Matsushita El Ind Co, Ltd, Chuo-ku, Osaka-shi, Osaka 540-6319 (JP); SASAI, Hisao c/o Matsushita El Ind Co, Ltd, Chuo-ku, Osaka-shi, Osaka 540-6319 (JP)
(74) Representative: Eisenführ, Speiser & Partner
(86) International application number: PCT/JP2005/011788
(87) International publication number: WO 2006/003873

(57) **Abstract**

The present invention provides an image encoding method and an image decoding method which can, during decoding, restore a sense of high-definition to an area of an input image originally having a high-definition component that was lost during encoding.

An additional information generation unit 102 of an image encoding apparatus determines a position where the high-definition component is restored to, and includes: a superposed position determination unit 201 which outputs position information PS indicating a determined position; a superposed component determination unit 202 which determines a high-definition component to restore and outputs high-definition component information OC indicating the determined high-definition component; a superposed parameter determination unit 203 which outputs a parameter OP for superposing the high-definition component; and a bitstream generation unit 204 which performs variable-length coding, as necessary, on the position information PS, high-definition component information OC, and parameter OP, and outputs this as additional information AI.

## Description

### Technical Field

The present invention relates to an image encoding method and an image decoding method employed when an image signal is compressed and encoded with high efficiency.

### Background Art

Generally, when an image is compressed and encoded, high-frequency components which the image originally had are lost through encoding processing. Accordingly, in Patent Reference 1, a method is disclosed in which a noise component lost through the encoding of the image is added after decoding. In this method, the amount of noise to be added is determined using a flag, indicating the noise amount, which is written within user data of a bitstream (coded data) on the encoding side, or quantization parameters written in the bitstream and prefilter parameters written within the user data of the bitstream; white noise is then added to the decoded image.
Patent Reference 1: Japanese Laid-Open Patent Application No. 8-79765

### Disclosure of Invention

### Problems that Invention is to Solve

However, with the above conventional method, the same amount of white noise is added to the entirety of a screen; or, the amount of white noise determined through the quantization parameters and prefilter parameters is superimposed on each macroblock. In other words, the noise amount to be added is determined regardless of the characteristics of the image on the screen. For example, in the above conventional method, the noise is superimposed even on areas that do not originally have a high-frequency component, and a reduction in image quality can be seen as a result.

Accordingly, an object of the present invention is to solve the abovementioned problems by providing an image encoding method and image decoding method which can restore, at the time of decoding, a sense of high definition to areas that originally have a high-definition component, in the case where the high-frequency component, or in other words, the high-definition component of an inputted image has been lost through the encoding processing.

### Means to Solve the Problems

To achieve the abovementioned object, the image encoding method of the present invention includes: an image encoding step of encoding an input image and generating first coded data and a decoded image of the encoded image; an extraction step of extracting a high-definition component included in the input image and position information of where the high-definition component is located within the input image; and an additional information generation step of generating additional information regarding the high-definition component, based on the high-definition component and the position information extracted in said extraction step.

Through this, it is possible to generated both coded data that is compatible with a conventional image encoding system (the JPEG system, MPEG system, and so on) and additional information for expressing the high-definition component. The additional information is not the high-definition component itself coded as image data; rather, the additional information uses part of the high-definition component, parameters for generating the high-definition component, and the like, thereby making it possible to significantly reduce the amount of data, as well as making it possible to create high-quality images with only a slight increase in the amount of information.

Here, in the additional information generation step, the additional information which includes the high-definition component and the position information may be generated based on the high-definition component and the position information extracted in said extraction step.

In addition, in the additional information generation step, a gain of the high-definition component is calculated, and additional information which includes the calculated gain may be generated based on the high-definition component and the position information extracted in said extraction step.

Through this, information such as the position, the type (model, model parameters, etc.), the amount (gain), and so on when the high-definition component is superposed is generated, and thus it is possible to generate information for superposing the high-definition component only for places in the inputted image in which the high-definition component is present. Alternatively, it is possible to generate the information for superposing the high-definition component only for places where the high-definition component is present in the inputted image and missing from the decoded image. Through this, the conventional problem in which appropriately superposing the high-definition component present in the original image was not possible can be eliminated, and the image quality can be significantly increased.

The image decoding method according to the present invention includes: an image decoding step of decoding first coded data that is obtained when an image is encoded, and generating a decoded image; an acquisition step of acquiring additional information regarding a high-definition component that corresponds to the decoded image; a high-definition component generation step of generating the high-definition component based on the additional information; a superposed position determination step of determining a position in the decoded image on which the high-definition component should be superposed, based on the decoded image or the additional information; and a synthesis step of superposing the high-definition component on the decoded image in the position determined in the superposed position determination step.

Through this, by generating a decoded image from coded data using a conventional image decoding system (the JPEG system, MPEG system, and so on), and generating a high-definition component of the image using the additional information for generating the high-definition component and superposing that high-definition component on the decoded image, it is possible to generate a high-definition image. This additional information is not the high-definition component itself coded as image data; rather, the additional information uses part of the high-definition component, parameters for generating the high-definition component, and the like, thereby making it possible to significantly reduce the amount of data, as well as making it possible to create high-quality images with only a slight increase in the amount of information.

Here, in the superposed position determination step, a position on which the high-definition component should be superposed may be determined based on position information included in the additional information.

In addition, in the superposed position determination step, a specific color component may be extracted from the decoded image, and a region which has the extracted specific color component may be determined as the position on which the high-definition component should be superposed.

Also, in the superposed position determination step, a high-frequency component may be extracted from the decoded image, and a region in which the extracted high-frequency component is greater than or equal to a predetermined value may be determined as the position on which the high-definition component should be superposed.

Through this, the high-definition component is superposed in accordance with information of the position of the high-definition component to be superposed, which is included in the additional information, or in accordance with characteristics of the decoded image (places in which a high-frequency component is present, places in which a certain color component is present, and so on); therefore, it is possible to generate information for superposing the high-definition component only on places in the inputted image in which the high-definition component is present. Through this, the conventional problem in which appropriately superposing the high-definition component present in the original image was not possible can be eliminated, and the image quality can be significantly increased.

Note that the present invention can be realized not only as such an image encoding method and image decoding method, but also as an image encoding apparatus and image decoding apparatus in which the characteristic steps included in the aforementioned methods are implemented as units, or as a program that causes the aforementioned steps to be performed by a computer. It goes without saying that such a program can be distributed via a storage medium such as a CD-ROM, via a transmission medium such as the Internet, and so on.

### Effects of the Invention

According to the image encoding method and image decoding method of the present invention, information that expresses a high-definition component is encoded apart from the main video only in the case where the high definition component has been lost due to encoding processing, as opposed to a conventional image encoding method and image decoding method; therefore, it is possible to greatly improve image quality with only a slight increase in encoding amount, and thus the present invention has significant practical value.

### Brief Description of Drawings

FIG. 1 is a block diagram showing an example of a configuration of an image encoding apparatus that uses an image encoding method according to the present invention (first embodiment).
FIG. 2 is a block diagram showing an example of a configuration of an additional information generation unit in an image encoding apparatus that uses an image encoding method according to the present invention (first embodiment).
FIGS. 3A and 3B are block diagrams showing a configuration of a superposed position determination unit in an image encoding apparatus that uses an image encoding method according to the present invention; FIG. 3A is a first configuration example, and FIG. 3B is a variation of the first configuration example (first embodiment).
FIGS. 4A and 4B are block diagrams showing a configuration of a superposed position determination unit in an image encoding apparatus that uses an image encoding method according to the present invention; FIG. 4A is a second configuration example, and FIG. 4B is a variation of the second configuration example (first embodiment).
FIGS. 5A and 5B are block diagrams showing a configuration of a superposed position determination unit in an image encoding apparatus that uses the image encoding method according to the present invention; FIG. 5A is a third configuration example, and FIG. 5B is a variation of the third configuration example (first embodiment).
FIGS. 6A and 6B are block diagrams showing a configuration of a superposed position determination unit in an image encoding apparatus that uses the image encoding method according to the present invention; FIG. 6A is a fourth configuration example, and FIG. 6B is a variation of the fourth configuration example (first embodiment).
FIG. 7 is a block diagram showing a first configuration example of a superposed component determination unit in an image encoding apparatus that uses an image encoding method according to the present invention (first embodiment).
FIG. 8 is a block diagram showing a second configuration example of a superposed component determination unit in an image encoding apparatus that uses an image encoding method according to the present invention (first embodiment).
FIG. 9 is a block diagram showing a configuration example of a superposed parameter determination unit in an image encoding apparatus that uses an image encoding method according to the present invention (first embodiment).
FIG. 10 is a flowchart showing a flow of a process of an additional information generation unit in an image encoding apparatus that uses an image encoding method according to the present invention (first embodiment).
FIG. 11 is a block diagram showing an example of a configuration of an image decoding apparatus that uses an image decoding method according to the present invention (second embodiment).
FIG. 12 is a block diagram showing a first configuration example of an additional information processing unit in an image decoding apparatus that uses an image decoding method according to the present invention (second embodiment).
FIG. 13 is a block diagram showing a second configuration example of an additional information processing unit in an image decoding apparatus that uses an image decoding method according to the present invention (second embodiment).
FIG. 14 is a flowchart showing a flow of a process of an additional information processing unit in an image decoding apparatus that uses an image decoding method according to the present invention (second embodiment).

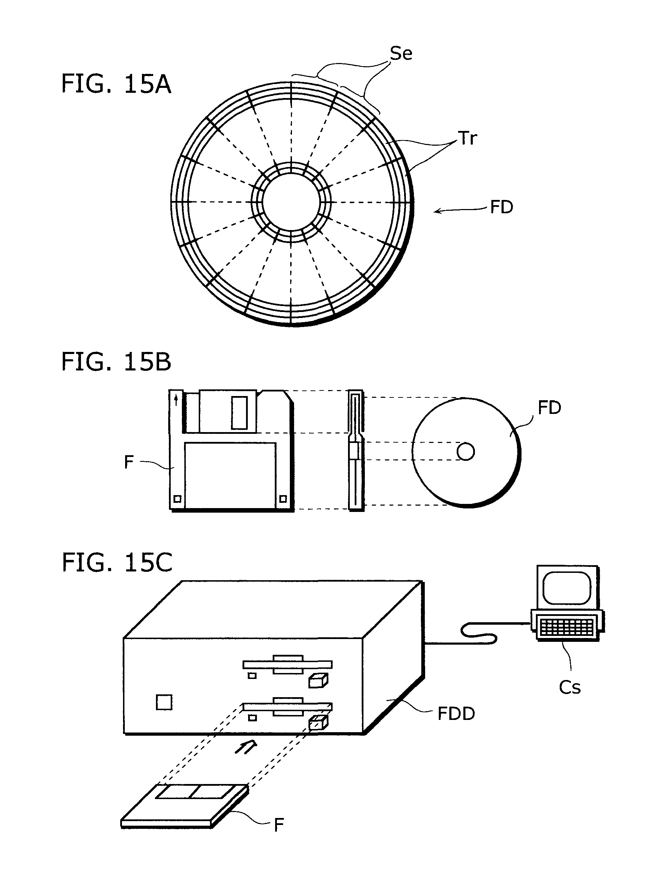

FIGS. 15A, 15B, and 15C are descriptive diagrams regarding a storage medium for storing a program for realizing, through a computer system, an image encoding method and an image decoding method in each embodiment. FIG. 15A is a descriptive diagram showing an example of a physical format of a flexible disc, which is an actual storage medium; FIG. 15B is a descriptive diagram showing an external view of the flexible disc as seen from the front, a cross-section structure, and the flexible disc; and FIG. 15C is a descriptive diagram showing a configuration for carrying out storage and reproduction of the aforementioned program on a flexible disc FD (third embodiment).
FIG. 16 is a block diagram showing an overall configuration of a content providing system (fourth embodiment).
FIG. 17 is a diagram showing an example of a cellular phone that uses an image encoding method and an image decoding method (fourth embodiment).
FIG. 18 is a block diagram of a cellular phone (fourth embodiment).
FIG. 19 is an example of a digital broadcast system (fourth embodiment).

### Numerical References

- 101: image encoding unit
- 102: additional information generation unit
- 201: superposed position determination unit
- 202: superposed component generation unit
- 203: superposed parameter determination unit
- 204: bitstream generation unit
- 701, 801: superposed position determination unit
- 702, 802: superposed component generation unit
- 703, 803: synthesis unit
- 1201: image decoding unit
- 1202: additional information processing unit

### Best Mode for Carrying Out the Invention

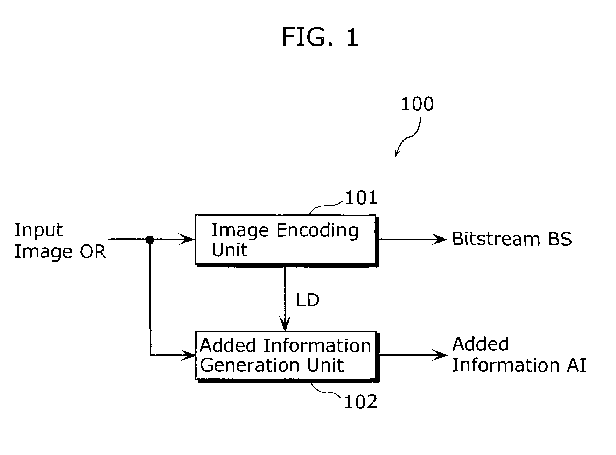

Hereafter, FIGS. 1 to 19 shall be used to describe embodiments of the present invention.

### (First Embodiment)

FIG. 1 is a block diagram showing a configuration of an image encoding apparatus 100 that uses an image encoding method according to the present invention. As shown in FIG. 1, the image encoding apparatus 100 includes an image encoding unit 101 and an additional information generation unit 102.

An input image OR is inputted into the image encoding unit 101. The image encoding unit 101 executes a conventional image encoding method. It is possible to use the ISO/IEC standard Joint Photographic Experts Group (JPEG) format, Moving Picture Experts Group (MPEG) format, the ITU-T standard H.26x format, or the like as the conventional image encoding method. The image encoding unit 101 outputs bitstream BS obtained by encoding the input image OR and a decoded image LD. The bitstream BS is outputted to the exterior of the image encoding apparatus 100, and is transmitted, stored, or processed in another such manner.

The decoded image LD is inputted into the additional information generation unit 102. The input image OR is also inputted to the additional information generation unit 102. The additional information generation unit 102 uses the input image OR and the decoded image LD and generates additional information AI for restoring a high-definition component lost from the input image OR. The additional information AI is outputted to the exterior of the image encoding apparatus 100, and is transmitted, stored, or processed in another such manner along with the bitstream BS.

The additional information AI may be written into a header area, a user data area, or the like within the bitstream BS and be transmitted, stored, or processed in such a manner; or, the additional information AI may be transmitted, stored, or processed as bitstream separate from the bitstream BS.

Hereafter, an example of a processing that occurs when the additional information generation unit 102 generates the additional information AI shall be described.

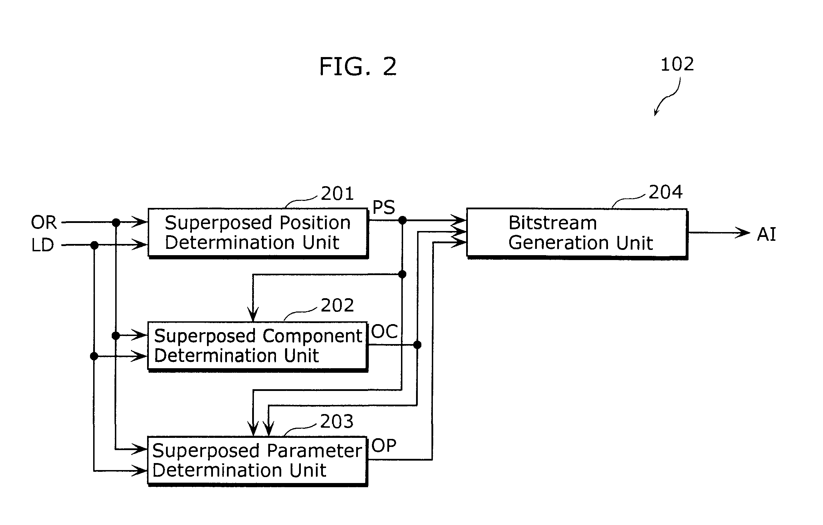

FIG. 2 is a block diagram showing a configuration of the additional information generation unit 102.

As shown in FIG. 2, the additional information generation unit 102 includes: a superposed position determination unit 201; a superposed component determination unit 202; a superposed parameter determination unit 203; and a bitstream generation unit 204.

The superposed position determination unit 201 determines a position where the high-definition component should be restored to based on the inputted input signal OR and the decoded image LD, and outputs position information PS that indicates the determined position. The superposed component determination unit 202 outputs high-definition component information OC that indicates the high-definition component, based on the inputted input signal OR, the decoded image LD, and the position information PS. The superposed parameter determination unit 203 outputs a parameter OP for when the high-definition component information OC is superposed, based on the inputted input signal OR, the decoded image LD, the position information PS, and the high-definition component information OC. The bitstream generation unit 204 executes variable-length encoding and the like, as necessary, on the inputted position information PS, the high-definition component information OC, and the parameter OP, and outputs this as the additional information AI. Hereafter, details of processing performed by the superposed position determination unit 201, the superposed component determination unit 202, and the superposed parameter determination unit 203 shall be described in order.

### (First Processing Example of the Superposed Position Determination Unit 201)

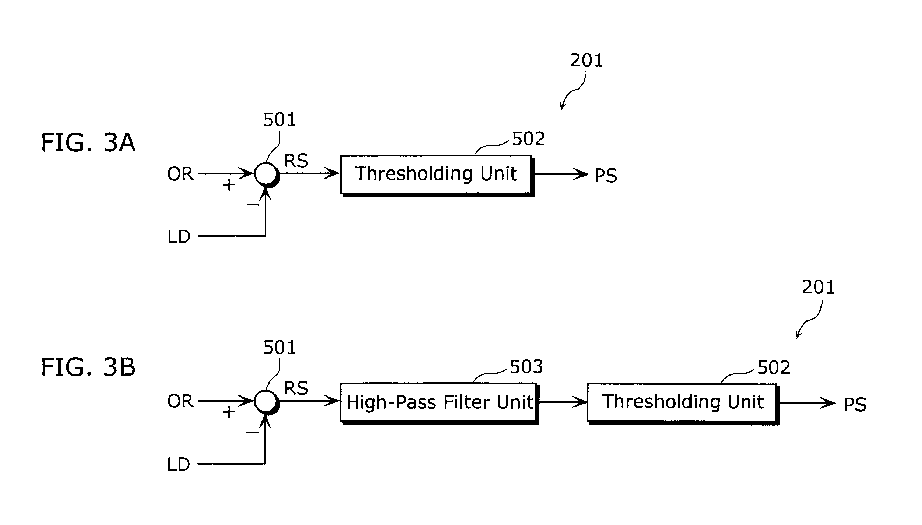

FIG. 3A is a block diagram showing a first configuration example of the superposed position determination unit 201. The superposed position determination unit 201 includes a differential computation unit 501 and a thresholding unit 502.

The differential computation unit 501 generates and outputs a differential image by removing the decoded image LD from the input image OR.

When the absolute value of the pixel values of the differential image generated by the differential computation unit 501 is greater than or equal to a threshold value, the thresholding unit 502 extracts the part that is greater than or equal to this value, and outputs a position of that part within a screen as the position information PS. In this case, it is acceptable to divide the differential image into blocks of a predetermined size; calculate, per block, a number of pixels whose absolute value of the pixel value of the differential image exceeds the threshold value; and output the position information PS indicating a position of the blocks whose number of pixels exceeds a different threshold value.

In addition, it is also acceptable to insert a high-pass filter 503 after the processing of the differential computation unit 501, as shown in FIG. 3B. Through this, a low-end component in the differential image is eliminated, and it is possible to even more precisely extract the high-definition component using only the high-end component of the differential image.

### (Second Processing Example of the Superposed Position Determination Unit 201)

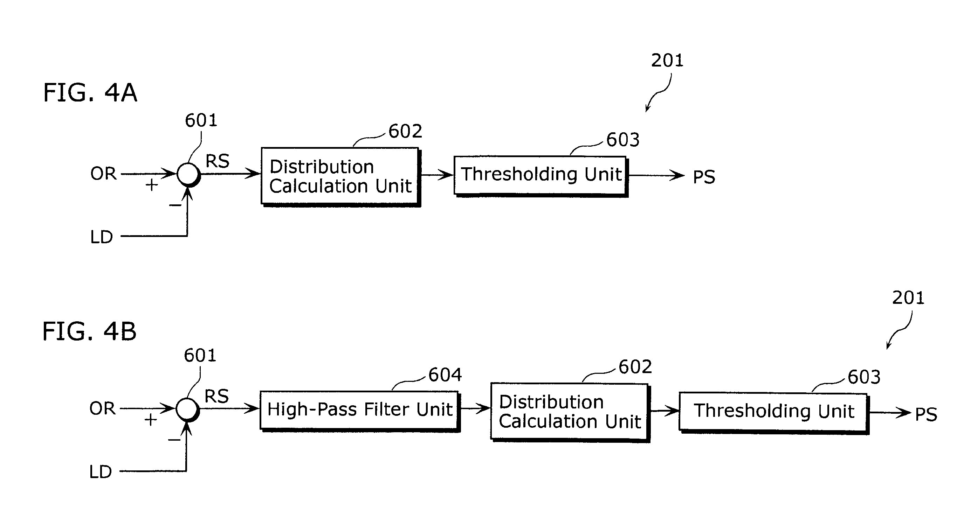

FIG. 4A is a block diagram showing a second configuration example of the superposed position determination unit 201. The superposed position determination unit 201 includes: a differential computation unit 601; a distribution calculation unit 602; and a thresholding unit 603.

The differential computation unit 602 generates and outputs a differential image by removing the decoded image LD from the input image OR.

The distribution calculation unit 602 calculates a distribution value for the pixel value of the differential image generated by the differential computation unit 601. In this case, it is acceptable, for example, to divide the differential image into blocks of a predetermined size and calculate the distribution value of the pixel value of the differential image per block. The distribution calculation unit 602 outputs the obtained distribution value to the thresholding unit 603.

Using the distribution value inputted from the distribution calculation unit 602, the thresholding unit 603 detects a part with a distribution value greater than or equal to a predetermined threshold value, and outputs the position of that part within a screen as the position information PS.

In addition, it is also acceptable to insert a high-pass filter 604 after the processing of the differential computation unit 601, as shown in FIG. 4B. Through this, a low-end component in the differential image is eliminated, and it is possible to even more precisely extract the high-definition component using only the high-end component of the differential image.

### (Third Processing Example of the Superposed Position Determination Unit 201)

FIG. 5A is a block diagram showing a third configuration example of the superposed position determination unit 201. The superposed position determination unit 201 includes a color-difference component examination unit 301 and a thresholding unit 302.

The input image OR or the decoded image LD is inputted into the color-difference component examination unit 301. Using a color-difference component of the inputted image, the color-difference component examination unit 301 extracts a part that has a pre-set color. Green, light blue, blue, red, and so on are examples of the preset color. For example, in the case where green is set, it is possible to extract a part that has a tree, grass, and so on. Also, in the case where light blue is set, it is possible to extract a part that has water, the sea, and so on. In terms of a method of extracting the part that has the pre-set color, there is a method in which the set color is indicated by a pixel value, and pixels which belong to a certain range of pixel values central to that pixel value are extracted; a method in which the set color is indicated by a frequency, and extraction is carried out with a band pass filter with that frequency as a central frequency; and the like.

The thresholding unit 302 applies thresholding to the color component outputted from the color-difference component examination unit, and outputs the position information PS of a part within the screen that has the color component greater than or equal to the threshold value.

Note that in the case where the decoded image LD is inputted to the color-difference component examination unit 301, if the same processing is carried out during decoding, it is possible to obtain the position information PS; thus in this case, the position information PS may or may not be included in the additional information AI in the bitstream generation unit 204. In addition, using the color-difference component in order to obtain the position information PS, including the threshold value of the thresholding unit 302 in the additional information AI, and the like are also acceptable.

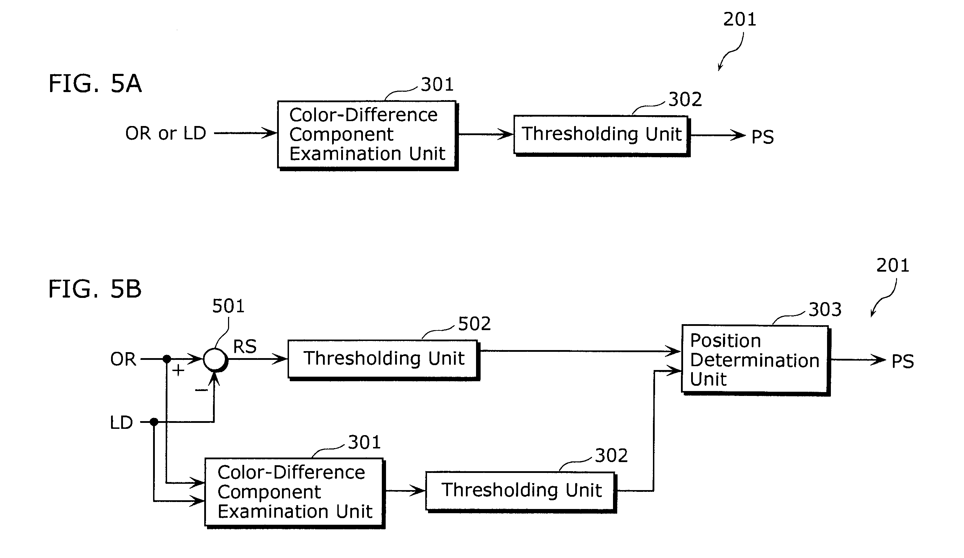

Also, it is acceptable to combine the present processing example with the methods for acquiring the position information PS as described in the first processing example or the second processing example of the superposed position determination unit 201. For example, a configuration in the case of combination with the first processing example of the superposed position determination unit 201 is shown in FIG. 5B. In this case, from a result outputted from the thresholding unit 502 and a result outputted from the thresholding unit 302, the position determination unit 303 extracts a part in which the absolute value of the pixel value of the differential image is larger than a predetermined value as well as which has a predetermined color component, and outputs that position information PS.

### (Fourth Processing Example of the Superposed Position Determination Unit 201)

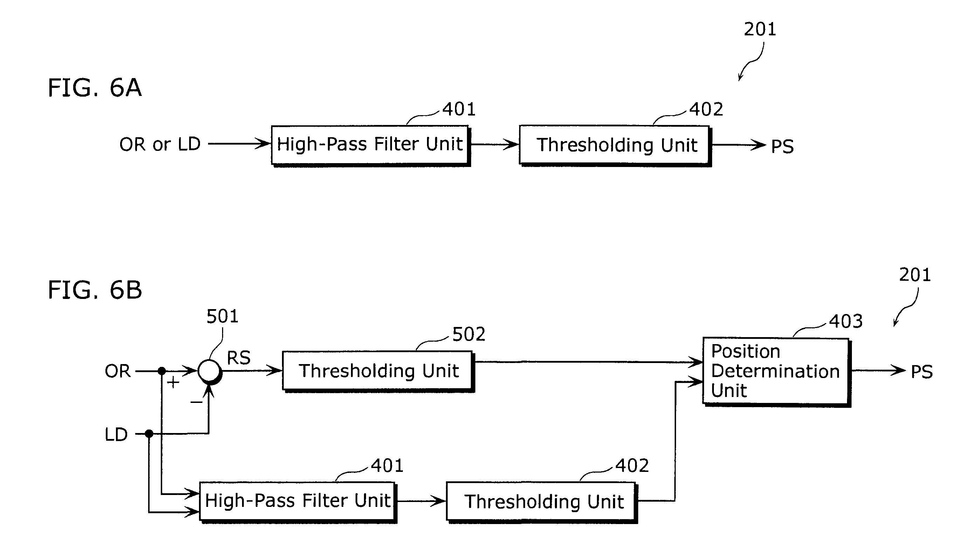

FIG. 6 is a block diagram showing a fourth configuration example of the superposed position determination unit 201. The superposed position determination unit 201 includes a high-pass filter unit 401 and a thresholding unit 402.

The input image OR or the decoded image LD is inputted into the high-pass filter unit 401. The high-pass filter unit 401 applies high-pass filtering on the inputted image. Through this, a high-end component of the inputted image is extracted, and is inputted into the thresholding unit 402.

The thresholding unit 402 applies thresholding to the high-end component of the image outputted from the high-pass filter unit 401, and outputs the position information PS of the part within the screen that has the high-end component greater than or equal to the threshold value.

Note that in the case of inputting the decoded image LD into the high-pass filter unit 401, if the same processing is carried out during decoding, it is possible to obtain the position information PS; thus, in this case, the position information PS may or may not be included in the additional information AI in the bitstream generation unit 204. In addition, using the high-end component in order to obtain the position information PS, including the threshold value of the thresholding unit 402 in the additional information AI, and the like are also acceptable.

Also, it is acceptable to combine the present processing example with the methods for acquiring the position information PS as described in the first processing example or the second processing example of the superposed position determination unit 201. For example, a configuration in the case of combination with the first processing example of the superposed position determination unit 201 is shown in FIG. 6B. In this case, from a result outputted from the thresholding unit 502 and a result outputted from the thresholding unit 402, the position determination unit 403 extracts a part in which the absolute value of the pixel value of the differential image is larger than a predetermined value, and which also has more of the high-end component than a predetermined value, and outputs that position information PS.

### (First Processing Example of the Superposed Component Determination Unit 202)

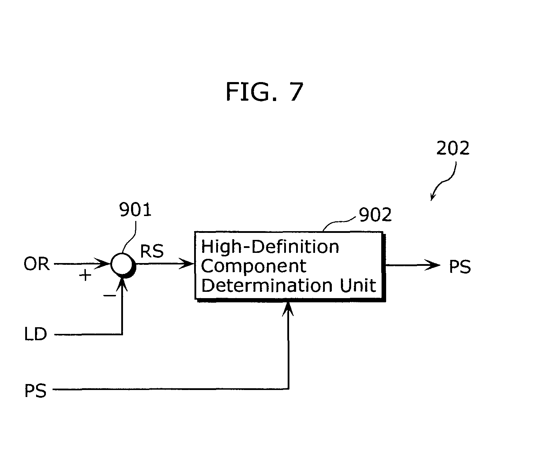

FIG. 7 is a block diagram showing a first configuration example of the superposed component determination unit 202. The superposed component determination unit 202 includes a differential computation unit 901 and a high-definition component determination unit 902.

The differential computation unit 901 generates and outputs a differential image by removing the decoded image LD from the input image OR.

The high-definition component determination unit 902 determines and outputs a representative pattern of the high-definition component, based on the differential image outputted from the differential computation unit 901 and the position information PS outputted from the superposed position determination unit 201. Here, for example, after the differential image is divided into predetermined regions (for example, blocks), only a part specified by the position information PS is isolated; a pattern of that average value, a pattern of a central value, a pattern of an average value or central value of a distribution value, a pattern of a frequency of peaks when a histogram of the distribution value is generated, and so on may be assumed as the representative pattern. The representative pattern is not limited to one; there may be a plurality. The representative pattern is outputted as the high-definition component information OC.

Note that in the case where the superposed position determination unit 201 generates a differential image of the input image OR and the decoded image LD, it is not necessary to use the difference computation unit 901 to generate a differential image.

### (Second Processing Example of the Superposed Component Determination Unit 202)

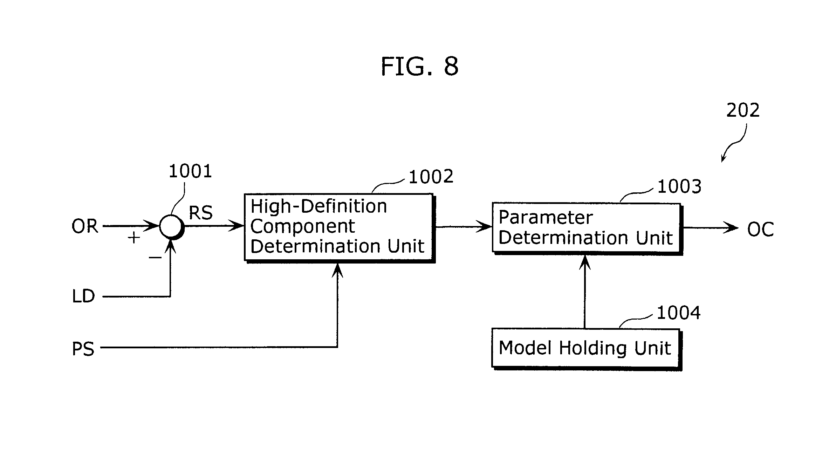

FIG. 8 is a block diagram showing a first configuration example of the superposed component determination unit 202. The superposed component determination unit 202 includes: a differential computation unit 1001; a high-definition component determination unit 1002; a parameter determination unit 1003; and a model holding unit 1004.

The differential computation unit 1001 generates and outputs a differential image by removing the decoded image LD from the input image OR.

The high-definition component determination unit 1002 determines and outputs, to the parameter determination unit 1003, a representative pattern of the high-definition component based on the differential image outputted from the differential computation unit 1001 and the position information PS outputted from the superposed position determination unit 201. Processing identical to that of the high-definition component determination unit 902 is acceptable.

The parameter determination unit 1003 expresses the inputted representative pattern as a model set in the model holding unit 1004. A Gaussian distribution function, a Poisson distribution function, and the like are examples of models. There may be one model, or there may be a plurality. The parameter determination unit 1003 determines the model that conforms with the representative pattern (in the case of a plurality of models) and parameters of the model (in the case where the model changes due to the parameters) and outputs this as the high-definition component information OC. As a method for determining the model that conforms with the representative pattern and the parameters of the model, there is a method where which of the pattern generated by the model and the representative pattern determined by the high-definition component determination unit 1002 has the smallest square error is selected, and so on.

Note that in the case where the superposed position determination unit 201 generates a differential image of the input image OR and the decoded image LD, it is not necessary to use the difference computation unit 1001 to generate a differential image.

### (Processing Example of the Superposed Parameter Determination unit 203)

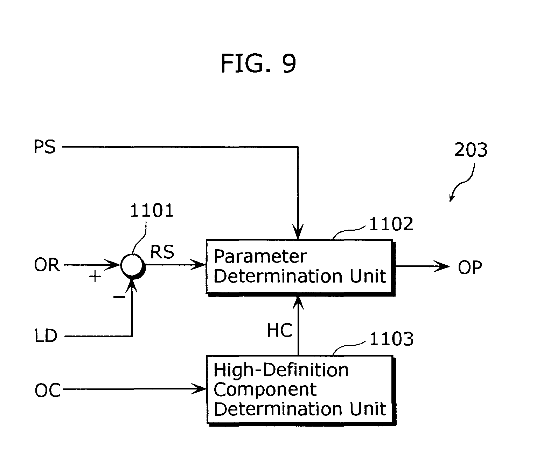

FIG. 9 is a block diagram showing an example of a configuration of the superposed parameter determination unit 203. The superposed parameter determination unit 203 includes: a differential computation unit 1101; a parameter determination unit 1102; and a high-definition component generation unit 1103.

The differential computation unit 1101 generates and outputs a differential image by removing the decoded image LD from the input image OR.

Using the high-definition component information OC inputted from the superposed component determination unit 202, the high-definition component generation unit 1103 generates the high-definition component. For example, in the case where the high-definition component information OC is generated through the first processing example of the superposed component determination unit 202, the high-definition component information OC is outputted as-is as the high-definition component HC. In addition, in the case where the high-definition component information OC is generated through the second processing example of the superposed component determination unit 202, the high-definition component HC is generated and outputted using the model and the model parameters.

The parameter determination unit 1102 determines a gain of the high-definition component HC based on the differential image RS, the high-definition component HC, and the position information PS outputted from the superposed position determination unit 201. For example, the gain of the high-definition component may be determined with a goal being to reduce, to the greatest extent possible, a difference between an image in an area of the differential image RS that is specified by the position information PS and the high-definition component HC. Or, the gain may be determined by calculating an energy of the differential image RS and an energy of the high-definition component HC, and comparing those energies. This gain may be determined for each area specified by the position information PS; or, one gain may be determined in order to reduce, to the greatest extent possible, an error in the entire screen. The determined gain is outputted as a parameter OP.

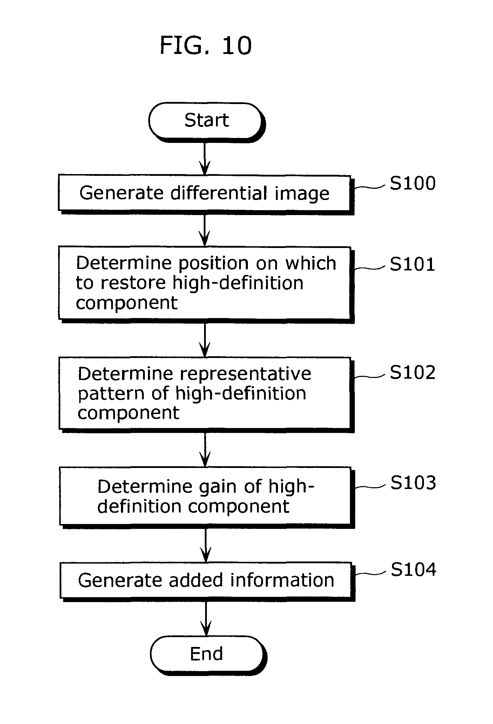

Next, an operation of the additional information generation unit 102, in the image encoding apparatus configured in the aforementioned manner, is described. Here, the case described is that in which the superposed position determination unit 201 is in the first configuration example and the superposed component determination unit 202 is in the first configuration example. FIG. 10 is a flowchart showing a flow of the process of the additional information generation unit 102 in such a case.

The differential computation unit 501 generates the differential image RS by subtracting the decoded image LD from the input image OR (Step S100). The thresholding unit 502 extracts, from the differential image RS generated by the differential computation unit 501, the part where the absolute value of the pixel value is greater than or equal to a predetermined threshold, and outputs, as the position information PS, the position of that part in within the screen, or in other words, the position where the high-definition component should be restored (Step S101). Next, the high-definition component determination unit 902 determines the representative pattern of the high-definition component based on the differential image RS and the position information PS, and outputs the determined representative pattern as the high-definition component information OC (Step S102). After that, the parameter determination unit 1102 determines the gain of the high-definition component HC based on the differential image RS, the high-definition component HC, and the position information PS outputted from the superposed position determination unit 201, and outputs the determined gain as the parameter OP (Step S103). Then, the bitstream generation unit 204 executes variable-length encoding as necessary on the inputted position information PS, high-definition component information OC, and parameter OP, and outputs this as the additional information AI (Step S104).

In this manner, the image encoding method according to the present invention encodes an input image through a conventional image encoding method, compares the input image with a decoded image generated through the conventional encoding, and extracts the high-definition component (high-end component) lost from the input image; generates a pattern, parameter, and the like representing that high-definition component; and encodes that information separate from the input image (main video) bitstream.

Therefore, by using the image encoding method according to the present invention, it is possible to generate bitstream compatible with conventional image encoding systems (such as JPEG, MPEG, and the like), and furthermore, it is possible to separately generate additional information for the high-definition component. This additional information is not encoded as image data of the high-definition component itself, but rather as one part of the high-definition component, parameters for generating the high-definition component, and so on; therefore, it is possible to significantly reduce a data amount, as well as realize high image quality through the addition of a small amount of information. In addition, information such as a place where the high-definition component is superposed, a type (model, model parameter, and so on), an amount (gain), and the like is generated, and thus it is possible to generate information for superposing the high-definition component only on places in the input image that have the high-definition component. Or, it is possible to generate the information for superposing the high-definition component only on places where the high-definition component is lacking from the decoded image, when the input image has the high-definition component. Through this, it is possible to resolve issues where conventional superposing is inadequate for the input image with the high-definition component, and thus greatly improve the image quality.

Note that in this embodiment of the present invention, four examples of processing methods by the superposed position determination unit 201 have been given and described, but it is possible to generate the position information PS using these methods individually, or using a plurality of these methods.

In addition, in this embodiment of the present invention, the method for finding the gain when the superposed parameter determination unit 203 superposes the high-definition component is described, but this does not have to include the additional information AI. In such a case, the high-definition component is superposed with a constant gain on the decoding side, and it is thus possible to reduce the information amount of the additional information AI.

### (Second Embodiment)

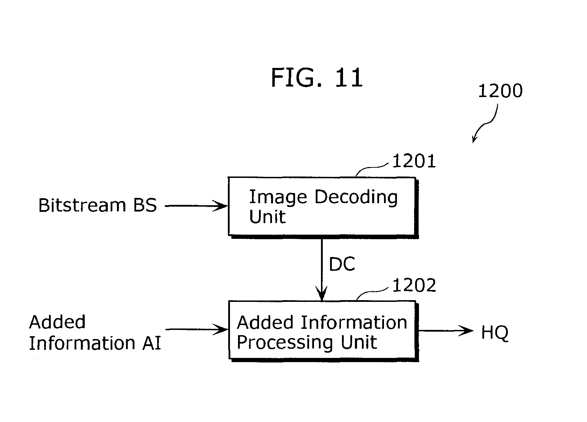

FIG. 11 is a block diagram showing a configuration of an image decoding apparatus 1200 used in an image decoding method according to the present invention. As shown in FIG. 11, the image decoding apparatus 1200 includes an image decoding unit 1201 and an additional information processing unit 1202. The bitstream BS and additional information AI, which are generated by an image encoding apparatus that uses an image encoding method according to the present invention as described in the first embodiment, are inputted into the image decoding unit 1200.

The bitstream BS is inputted into the image decoding unit 1201. The image decoding unit 1201 performs conventional image decoding on the bitstream BS. For example, in the case where the bitstream BS is encoded in the JPEG format, it is decoded in the JPEG format; in the case where the bitstream BS is encoded in the MPEG format, it is decoded in the MPEG format; in the case where the bitstream BS is encoded in the H.26x format, it is decoded in the H.26x format; and so on. The decoded image DC generated by the image decoding unit 1201 is outputted to the additional information processing unit 1202.

The decoded image DC and the additional information AI are inputted to the additional information processing unit 1202. The additional information processing unit 1202 uses the additional information AI to execute processing on the decoded image DC, and outputs this as a high-quality decoded image HQ.

Hereafter, a processing method of the additional information processing unit 1202 is described.

### (First Processing Example of the Additional information Processing Unit 1202)

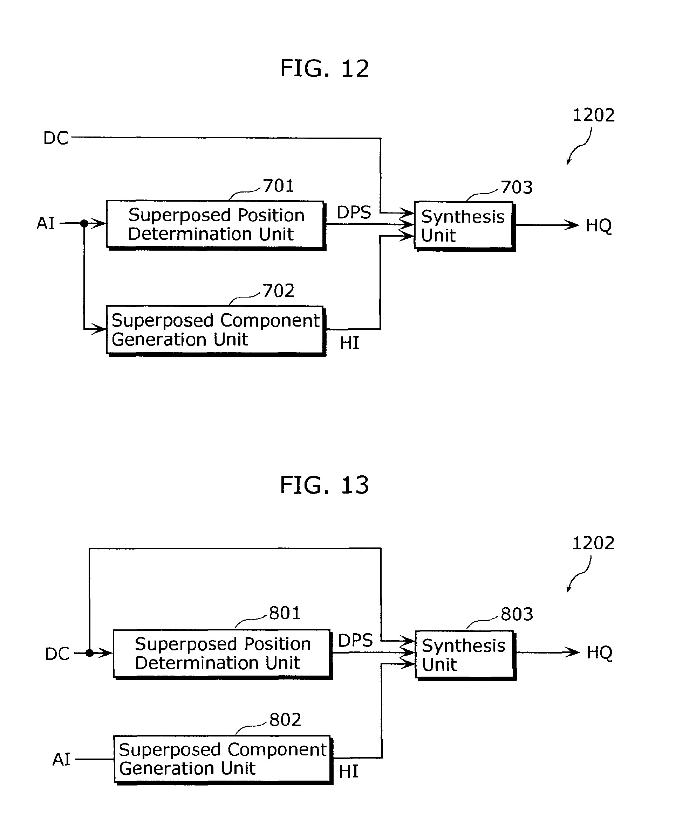

FIG. 12 is a block diagram showing a first configuration example of the additional information processing unit 1202. The additional information processing unit 1202 includes: a superposed position determination unit 701; a superposed component generation unit 702; and a synthesis unit 703.

The superposed position determination unit 701 determines a position where a high-definition component should be superposed, from position information denoted in the inputted additional information AI (the position information PS in the first embodiment), and outputs this as position information DPS.

The superposed component generation unit 702 uses information for generating the high-definition component, which is included in the inputted additional information AI (the high-definition component information OC and the parameter OP in the first embodiment), and generates the high-definition component to be superposed. For example, in the case where the high-definition component information OC is generated through the first processing example of the superposed component determination unit 202 from the first embodiment, the high-definition component information OC is the high-definition component; the gain obtained from the parameter OP is added on to this; and it is outputted as the high-definition component HI. Also, for example, in the case where the high-definition component information OC is generated through the second processing example of the superposed component determination unit 202 from the first embodiment, the high-definition component is generated using the model and model parameter specified by the high-definition component information OC; the gain obtained from the parameter OP is added on to this; and it is outputted as the high-definition component HI.

The synthesis unit 703 superposes the high-definition component HI on the parts of the inputted decoded image DC that are specified by the position information DPS, and generates and outputs a high-quality image HQ.

### (Second Processing Example of the Additional information Processing Unit 1202)

FIG. 13 is a block diagram showing a second configuration example of the additional information processing unit 1202. The additional information processing unit 1202 includes: a superposed position determination unit 801; a superposed component generation unit 802; and a synthesis unit 803.

The superposed position determination unit 801 determines a position where a high-definition component should be superposed, using the inputted decoded image DC, and outputs this as position information DPS. For example, an area that has a specific color component, an area that has a high-end component, and the like is selected as the position where the high-definition component is to be superposed. The area that has the specific color component can be determined by having the decoded image DC as the input in the method described using FIG. 5, in the third processing example of the superposed position determination unit 201 in the first embodiment. In addition, the area that has the high-end component can be determined by having the decoded image DC as the input in the method described using FIG. 6, in the fourth processing example of the superposed position determination unit 201 in the first embodiment. In this case, the position information PS is not included in the additional information AI.

Processing performed by the superposed component generation unit 802 and the synthesis unit 803 is identical to the processing performed by the superposed component generation unit 702 and the synthesis unit 703 described in the first processing example of the additional information processing unit, and thus descriptions are omitted.

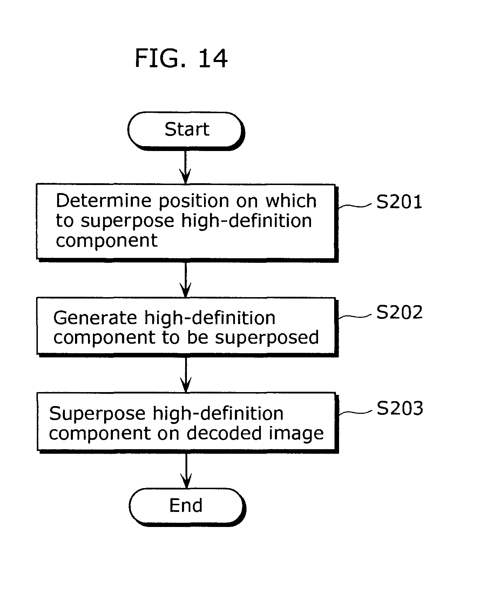

Next, a process of the additional information processing unit 1202 in the image decoding apparatus 1200 configured as described above is described. Here, the case described is that in which the additional information processing unit 1202 is in the first configuration example. FIG. 14 is a flowchart showing a flow of a process of the additional information processing unit 1202 in this case.

The superposed position determination unit 701 determines the position where the high-definition component should be superposed from the position information included in the inputted additional information AI, and outputs this as the position information DPS (Step S201). Next, the superposed component generation unit 702 uses information uses information for generating the high-definition component, which is included in the inputted additional information AI, and generates the high-definition component to be superposed (Step S202). Then, the synthesis unit 703 superposes the high-definition component HI on the parts of the inputted decoded image DC that are specified by the position information DPS, and generates and outputs a high-quality image HQ (Step S203).

In this manner, the image decoding method according to the present invention decodes the bitstream of the input image (main video) through a conventional image decoding method, and uses the additional information to superpose the generated high-definition component on the decoded image.

Therefore, with the image decoding method according to the present invention, the decoded image is generated from the bitstream using a conventional image decoding method (JPEG method, MPEG method, and the like), and furthermore, by using the additional information for generating the high-definition component to separately generate the high-definition component of the image and superposing this on the decoded image, it is possible to generate a high-definition image. This additional information is not encoded as image data of the high-definition component itself, but is rather one part of the high-definition component image, a parameter for generating the high-definition component, and the like; therefore, it is possible to significantly reduce the amount of data, as well as realize high image quality through the addition of a small amount of information. In addition, the high-definition component is superposed in accordance with information such as a place, a type (model, model parameter, and so on), an amount (gain) and the like at the time of superposing the high-definition component, which are included in the additional information; or, the high-definition component is superposed in accordance with a characteristic of the decoded image (a place with a high-frequency component, a place with a specific color component). Therefore, it is possible to generate information for superposing the high-definition component only on the place that has the high-definition component in the input image. Through this, it is possible to resolve issues where conventional superposition is inadequate for the input image with the high-definition component, and thus greatly improve the image quality.

Note that in this embodiment of the present invention, two examples processing methods performed by the additional information processing unit 1202 are given: one, where the position information PS is included in the additional information AI, and two, where the position information PS is not included. However, it is acceptable to use these separately, or use both methods, to determine the superposed position.

In addition, in the embodiment of the present invention, the case described is that where, in the superposed component generation unit 702 and the superposed component generation unit 802, the gain indicated in the additional information AI is added to the high-definition component to be superposed; however, in the case where the gain information is not included in the additional information AI, the gain does not have to be added. In such a case, by superposing the high-definition component with a constant gain, the information amount of the additional information AI can be reduced.

### (Third Embodiment)

Furthermore, by storing a program for realizing an image encoding method and image decoding method such as described in each of the above embodiments in a storage medium such as a flexible disk, the processing described in each of the above embodiments can easily be executed by an independent computer system.

FIGS. 15A, 15B, and 15C are descriptive diagrams showing the case where the image encoding method and the image decoding method as described in each of the above embodiments are executed by a the computer system, using the program stored on the storage medium such as a flexible disk.

FIG. 15B shows the exterior of the flexible disk as viewed from the front, a cross-section construction, and the flexible disk, while FIG. 15A shows an example of a physical format of the flexible disk, which is the storage medium itself. A flexible disk FD is contained within a case F, and plural tracks are formed on a surface of the disk, running concentrically from an outer periphery to an inner periphery; each track is divided, in angular direction from the center, into 16 sectors Se. Therefore, with the flexible disk in which the abovementioned program is stored, the program is stored in regions into which the flexible disk FD is divided.

In addition, FIG. 15C shows a configuration for recording/reproducing the abovementioned program into/from the flexible disk FD. In the case where the abovementioned program for realizing the image encoding method and the image decoding method is to be recorded into the flexible disc FD, the abovementioned program is written from a computer system Cs via a flexible disk drive. In addition, in the case where the aforementioned image encoding method and image decoding method which are realized by the program in the flexible disc are to be assembled within the computer system, the program is read out from the flexible disk through the flexible disk drive, and transmitted to the computer system.

Note that in the above description, the recording medium is described as a flexible disk, but an optical disk may be used in the same manner. Also, the recording medium is not limited to a disk; anything is acceptable as long as it can store a program; for example, an IC card, a ROM cassette, and so on.

### (Fourth Embodiment)

Furthermore, an example of an application of the image encoding method and image decoding method given in the above embodiments, and a system using those methods, is hereby described.

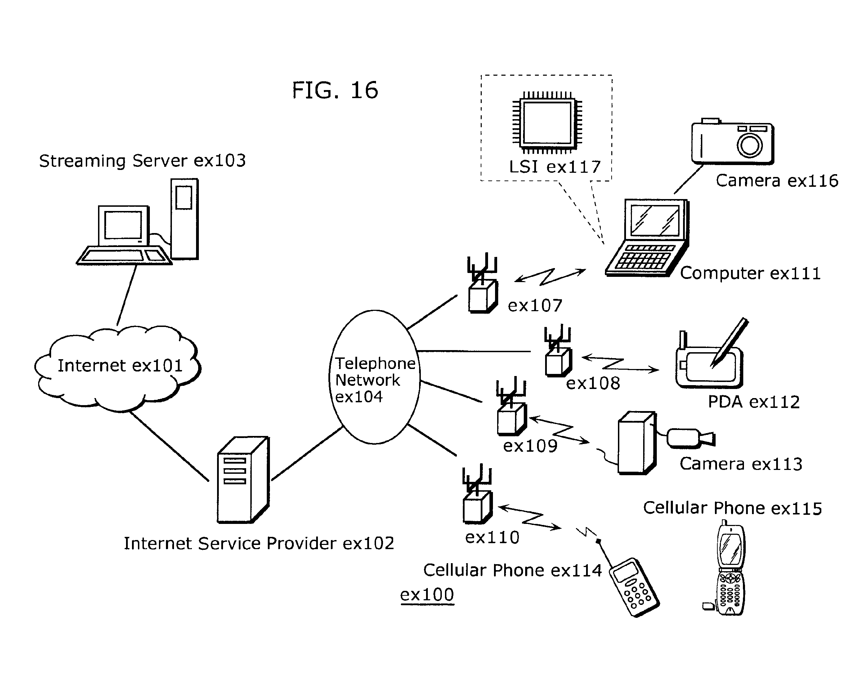

FIG. 16 is a block diagram showing an overall configuration of a content providing system ex100 for realizing a content distribution service. An area to which a communications service is provided is divided into a desirable size, and base stations ex107 to ex110, which are fixed wireless stations, are set up.

This content providing system 100 connects, for example, a computer ex111, a Personal Digital Assistant (PDA) ex112, a camera ex113, a cellular phone ex 114, a camera cellular phone ex 115, and the like via an internet service provider ex102 on the Internet, a telephone network ex104, and the base stations ex107 to ex110.

However, the content providing system ex100 is not limited to the combination shown in FIG. 16; a combination in which any of the components are connected is acceptable. In addition, each device may be directly connected via the telephone network ex104, rather than via the base stations ex107 to ex110, which are the fixed wireless stations.

The camera ex113 is a device which can capture a moving picture, such as a digital video camera and the like. Also, the cellular phone may be a cellular phone device that uses the Personal Digital Communications (PDC) system, a Code Division Multiple Access (CDMA) system, a Wideband - Code Division Multiple Access (W-CDMA) system, or a Global System for Mobile Communications (GSM) system; or may be a Personal Handyphone System (PHS) or the like.

In addition, a streaming server ex103 is connected from the camera ex113 to the base station ex109 through the telephone network ex104, and thus live distribution and the like, based on enbitstream sent by a user who uses the camera ex113, is possible. It is acceptable to carry out the encoding processing of the filmed data with the camera ex113, or with a server and the like which sends data. In addition, moving picture data filmed with the camera 116 may be sent to the streaming server ex103 via the computer ex111. The camera ex116 is a device that can film still images and moving pictures, such as a digital camera and the like. In this case, encoding of the moving picture data may be carried out by either of the camera ex116 and the computer ex111. The encoding processing is carried out by an LSI ex117 which is included in the computer ex111 and the camera ex116. Note that image encoding/decoding software can be integrated into some sort of storage media (a CD-ROM, a flexible disk , a hard disk, and so on) which is a storage medium readable by the computer ex111 and the like. Furthermore, the moving picture data may be sent by the camera cellular phone ex115. The moving picture data at this time is data encoded by the LSI included in the cellular phone ex115.

With the content providing system ex100, content the user has filmed with the camera ex113, the camera ex116, and the like (for example, a video of a musical performance) is encoded in the same manner as in the above embodiments and sent to the streaming server ex103; the streaming server ex103 streams the content to a client from which there has been a request. The computer ex111, the PDA ex112, the camera ex113, and cellular phone ex114, and the like, which can decode the encoded data, can be thought of as the client. In this manner, with the content providing system ex100, the client can receive and reproduce encoded data, and furthermore, as the client can receive, decode, and reproduce the data in real time, it is possible to realize personal broadcasting as well.

It is acceptable to use the image encoding device or the image decoding device described in each of the aforementioned embodiments for the encoding and decoding of each device that makes up this system.

The cellular phone shall be described as an example.

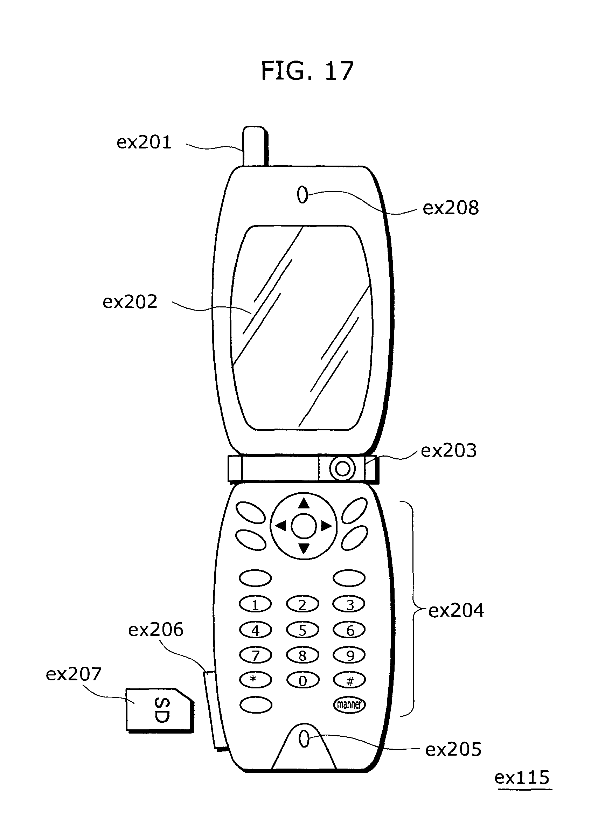

FIG. 17 is a diagram showing the cellular phone ex115 that uses the image encoding method and the image decoding method described in the above embodiments. The cellular phone ex115 includes: an antenna ex201 for sending/receiving a radio wave to/from the base station ex110; a camera unit ex203 which is a CCD camera or the like that can film video and still pictures; a display unit ex202, which is a liquid-crystal display and the like, and which displays decoded data of video filmed by the camera unit ex203, video received by the antenna ex201, and so on; a main body unit made up of an operation key group ex 204; an audio output unit ex208, which is a speaker or the like for outputting audio; an audio input unit ex 205, which is a microphone or the like for inputting audio; a storage medium 207 for saving encoded data or decoded data, such as data of filmed moving pictures or still images, received e-mail data, moving picture data of still image data, and the like; and a slot unit ex206 for making the storage medium ex207 mountable in the cellular phone ex115. The storage medium ex207 stores, within a plastic case, a flash memory component, which is one type of Electrically Erasable and Programmable Read-Only Memory (EEPROM), which in turn is a non-volatile memory that is electrically rewritable and erasable; for example, an SD Card.

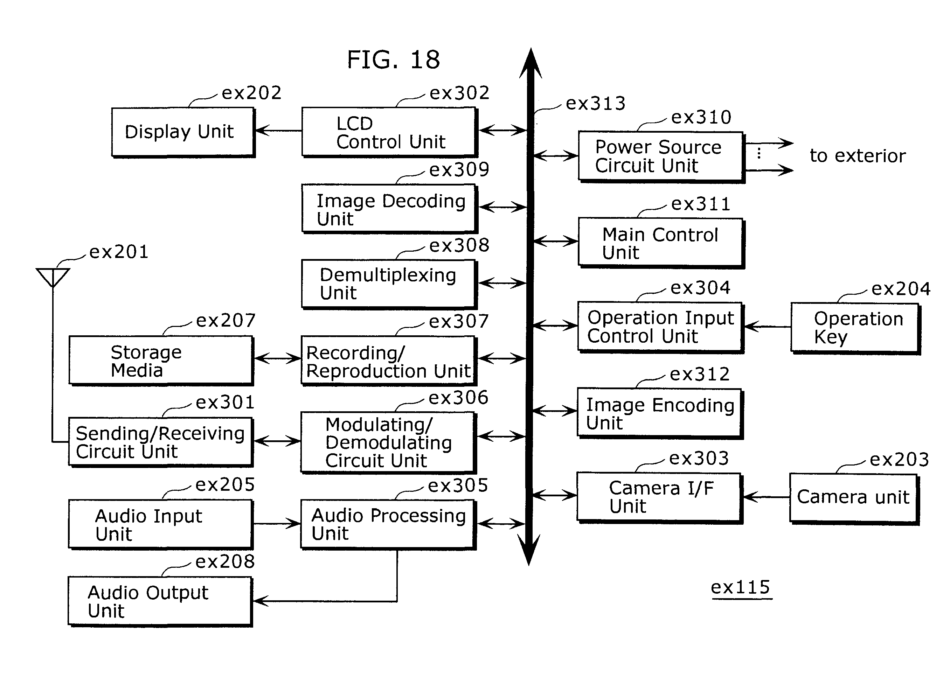

Next, FIG. 18 is used to describe the cellular phone ex115. The cellular phone ex115 connects a power source circuit unit ex310, an operation input control unit ex304, an image encoding unit ex312, a camera interface unit ex303, a Liquid Crystal Display (LCD) control unit ex302, an image decoding unit ex309, a demultiplexing unit ex308, a recording/reproduction unit ex307, a modulating/demodulating unit ex306, and an audio processing unit ex305 to one another via a synchronous bus ex313, so that a main control unit ex311 can centrally control each part of the main body unit that includes the display unit ex202 and the operation key group ex204.

When an end conversation/power key is turned on through an operation of the user, the power source circuit unit ex310 activates the camera-equipped digital cellular phone ex115, putting it in an operational state, by supplying power from a battery pack to each unit.

The cellular phone ex115 converts an audio signal collected by the audio input unit ex205 during an audio conversation mode into digital audio data through the audio processing unit ex305, based on a control by the main control unit ex311, which is a CPU, ROM, RAM, and the like; performs spread spectrum processing on the digital audio data with the modulating/demodulating circuit unit ex306; and, after executing digital-to-analog conversion processing and frequency conversion processing in a sending/receiving circuit ex301, sends the digital audio data via the antenna ex201. In addition, in audio conversation mode, the cellular phone ex115 amplifies a received signal received through the antenna ex201; performs frequency conversion processing and analog digital conversion processing on the received signal; performs reverse spread spectrum processing with the modulating/demodulating circuit unit ex306; and after converting the received signal into an analog audio signal through the audio processing unit ex305, outputs this via the audio output unit ex208.

Furthermore, in the case of sending an e-mail while in a data communications mode, text data of the e-mail inputted through operation of the operation keys ex204 of the main body unit is sent to the main control unit ex311 via the operation input control unit ex304. The main control unit ex311 performs spread spectrum processing on the text data with the modulating/demodulating circuit unit ex306, and after executing digital-to-analog conversion processing and frequency conversion processing in a sending/receiving circuit ex301, sends the text data to the base station ex110 via the antenna ex201.

In the case of sending image data while in the data communications mode, image data filmed by the camera unit ex203 is supplied to the image encoding unit ex312 via the camera interface unit ex303. In addition, in the case of not sending the image data, it is also possible to directly display the image data filmed by the camera unit ex203 in the display unit ex202 via the camera interface unit ex303 and LCD control unit ex302.

The image encoding unit ex312 is of a configuration which includes the image encoding apparatus described in the present invention, and converts image data supplied by the camera unit ex203 into encoded image data through an encoding method used in the image encoding apparatus shown in the above embodiments, and outputs this to the demultiplexing unit ex308. In addition, at the same time, the cellular phone ex115 sends the audio collected by the audio input unit ex205 during filming by the camera unit ex203 as digital audio data to the demultiplexing unit ex308 via the audio processing unit ex305.

The demultiplexing unit ex308 multiplexes the encoded image data supplied by the image encoding unit ex312 with the audio data supplied by the audio processing unit ex305 in a predetermined form; performs, with the modulating/demodulating circuit unit 306, spread spectrum processing on the multiplexed data obtained as a result of the multiplexing; and, after executing digital-to-analog conversion processing and frequency conversion processing in a sending/receiving circuit ex301, sends the digital audio data via the antenna ex201.

In the case of receiving data of a moving image file that is linked from a web page while in the data communications mode, reverse spread spectrum processing is performed by the modulating/demodulating circuit unit ex306 on the received signal received from the base station ex110 via the antenna ex201, and the multiplexed data obtained as a result is sent to the demultiplexing unit ex308.

In addition, to decode the multiplexed data received via the antenna ex201, the demultiplexing unit ex308 splits the multiplexed data into an encoded bit stream of the image data and an encoded bit stream of the audio data, and via the synchronous bus ex313, supplies the encoded image data to the image decoding unit ex309, and supplies the audio data to the audio processing unit ex305.

Next, the image decoding unit is of a configuration which includes the image decoding apparatus described in the present invention, and generates moving picture data for reproduction by decoding an encoded bit stream of image data using a decoding method that corresponds to the encoding method described in the above embodiments; this moving picture data is supplied to the display unit ex202 via the LCD control unit ex302, and through this, video data included in a moving picture file linked from a web page is displayed. At the same time, after converting the audio data to an analog audio signal, the audio processing unit ex305 supplies this to the audio output unit ex208, and through this, audio data included in a moving picture file linked from a web page, for example, is reproduced.

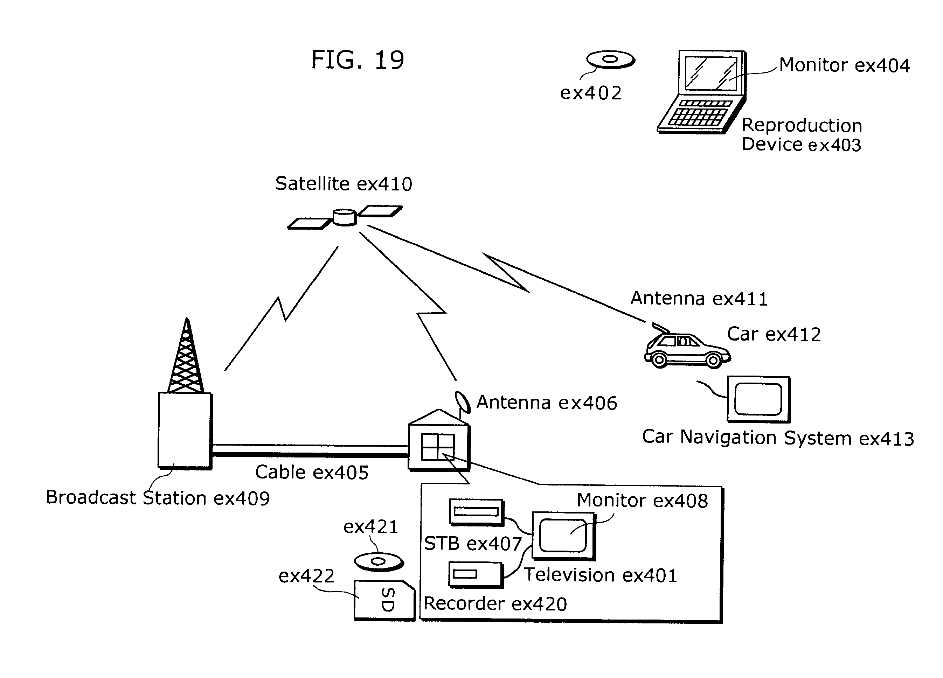

Note that in addition to the above system example, satellite and ground wave digital broadcast have recently become important topics, and thus it is possible to integrate at least one of the image encoding apparatus or the image decoding apparatus described in the above embodiments into a digital broadcast system as is shown in FIG. 19. Specifically, a broadcast station ex409 transmits an encoded bit stream of video information via radio waves to communications or a broadcast satellite ex410. Having received this, the broadcast satellite ex410 emits broadcast radio waves, which are received by an antenna ex406 of a household that has satellite broadcast receiving equipment for receiving this radio wave; the encoded bit stream is decoded and reproduced by a device such as a television (receiving device) ex401 or a set-top box (STB) ex407. In addition, it is possible to mount the image decoding apparatus described in the above embodiments in a reproduction device which reads out and decodes the encoded bit stream which has been stored in a storage media ex402, which is a storage medium such as a CD, DVD, and the like. In such a case, a reproduced image signal is displayed in a monitor ex404. Furthermore, another configuration that can be considered is one in which the image decoding device is mounted within a set-top box ex407 connected to a cable television cable ex405 or a satellite/ground wave broadcast antenna ex406, which performs reproduction in a monitor ex408 of a television. At such a time, it is acceptable to integrate the image decoding device within the television rather than within the set-top box. Moreover, it is also possible for a car ex412 that has an antenna ex411 to receive the signal from the satellite ex410 or the base station ex107, and reproduce the moving picture in a display unit of a car navigation system ex413 and the like which is included in the car ex412.

Furthermore, it is also possible to encode the image signal with the image encoding apparatus described in the above embodiments and store this in a storage medium. As specific examples, there are recorders such as a DVD recorder which records the image signal onto a DVD disk ex421, a disk recorder which records onto a hard disk, and so on. Furthermore, it is also possible to record the image signal onto an SD card ex422. If the recorder ex420 includes the image decoding apparatus described in the above embodiments, it is possible to reproduce the image signal recorded in the DVD disk 421, the SD card ex422, and the like, and display the reproduced image signal through a monitor ex408.

Note that a configuration which excludes the camera unit ex203, the camera interface unit ex303, and the image encoding unit ex312 shown in FIG. 18 can be considered for the configuration of the car navigation system ex413; the same can be considered for the computer ex111, the television (receiving device) ex401, and the like.

Also, three configurations for a terminal such as the abovementioned cellular phone ex114 can be considered: a sending/receiving terminal which has both an encoding device and a decoding device; a sending terminal which has only the encoding device; and a receiving terminal which has only the decoding device.

In such a manner, it is possible to use the image encoding method and image decoding method described in the above embodiments in any of the aforementioned devices/systems, and through this, it is possible to obtain the effects given in the above embodiments.

Note that the present invention is not limited to the above embodiments; various variations and alterations are possible without deviating from the scope of the present invention.

In addition, each function block in each embodiment is typically realized as an LSI, which is an integrated circuit. These may each be individually chipped, or may be chipped so as to include part or all of the function blocks. (For example, all functions blocks aside from memories may be chipped together.)

Here, LSI has been mentioned, but there are also cases where, depending on an integration degree, the circuit is called IC, system LSI, super LSI, or ultra LSI.

Also, a means for realizing the integrated circuit is not limited to LSI; a dedicated circuit or a generic processor is also acceptable. It is also acceptable to use a Field Programmable Gate Array (FPGA) that can be programmed after manufacture of the LSI, a reconfigurable processor in which connections of circuit cells and settings within the LSI can be reconfigured after the manufacture of the LSI, and the like.

Furthermore, should integrated circuit technology that replaces LSI appear through progress in semiconductor technology or other derived technology, that technology can naturally be used to carry out integration of the function blocks. Application of biotechnology is also a possibility.

### Industrial Applicability

The image encoding method and image decoding method according to the present invention can significantly improve image quality with only a slight increase in an amount of encoding, as compared to a conventional encoding method and decoding method, and also has an effect in which a high-definition component can be restored to a part of a target image that had the high-definition component; thus the image encoding method and the image decoding method are applicable in accumulation, transmission, communications, and the like used in, for example, a cellular phone, a DVD apparatus, a personal computer, and the like.

## Claims

1. An image encoding method comprising:
an image encoding step of encoding an input image and generating first coded data and a decoded image of the encoded image;
an extraction step of extracting a high-definition component included in the input image and position information of where the high-definition component is located within the input image; and
an additional information generation step of generating additional information regarding the high-definition component, based on the high-definition component and the position information extracted in said extraction step.

2. The image encoding method according to Claim 1, further comprising
a second coded data generation step of generating a second coded data that includes the additional information.

3. The image encoding method according to Claim 1,
wherein in said image encoding step, the additional information is present in a header area or user data area of the first coded data.

4. The image encoding method according to Claim 1,
wherein in said extraction step, a differential image of the input image and the decoded image is generated, a region that has the high-definition component is specified using the generated differential image, and the position information is extracted.

5. The image encoding method according to Claim 4,
wherein in said extraction step, a distribution of the generated differential image is calculated, a region in which a calculated distribution value is greater than or equal to a predetermined value is specified as the region that has the high-definition component, and the position information is extracted.

6. The image encoding method according to Claim 1,
wherein in said extraction step, a specific color component is extracted from the input image or the decoded image, a region which has the extracted specific color component is specified as the region that has the high-definition component, and the position information is extracted.

7. The image encoding method according to Claim 6,
wherein the specific color component is green.

8. The image encoding method according to Claim 1,
wherein in said extraction step, a high-frequency component is extracted from the input image or the decoded image, a region in which the extracted high-frequency component is greater than or equal to a predetermined value is specified as the region that has the high-definition component, and the position information is extracted.

9. The image encoding method according to Claim 1,
wherein in said extraction step, a differential image between the input image and the decoded image is generated, and the high-definition component is extracted using the generated differential image.

10. The image encoding method according to Claim 9,
wherein in said extraction step, the high-definition component is represented using parameters of a pre-set function.

11. The image encoding method according to Claim 10,
wherein the function is a normal distribution function.

12. The image encoding method according to Claim 1,
wherein in said additional information generation step, the additional information which includes the high-definition component and the position information is generated based on the high-definition component and the position information extracted in said extraction step.

13. The image encoding method according to Claim 1,
wherein in said additional information generation step, a gain of the high-definition component is calculated, and additional information which includes the calculated gain is generated based on the high-definition component and the position information extracted in said extraction step.

14. An image decoding method comprising:
an image decoding step of decoding first coded data that is obtained when an image is encoded, and generating a decoded image;
an acquisition step of acquiring additional information regarding a high-definition component that corresponds to the decoded image;
a high-definition component generation step of generating the high-definition component based on the additional information;
a superposed position determination step of determining a position in the decoded image on which the high-definition component should be superposed, based on the decoded image or the additional information; and
a synthesis step of superposing the high-definition component on the decoded image in the position determined in said superposed position determination step.

15. The image decoding method according to Claim 14,
wherein in said acquisition step, the additional information is acquired from second coded data which contains the additional information.

16. The image decoding method according to Claim 14,
wherein in said acquisition step, the additional information is acquired from the first coded data.

17. The image decoding method according to Claim 14,
wherein in said superposed position determination step, a position on which the high-definition component should be superposed is determined based on position information included in the additional information.

18. The image decoding method according to Claim 14,
wherein in said superposed position determination step, a specific color component is extracted from the decoded image, and a region which has the extracted specific color component is determined as the position on which the high-definition component should be superposed.

19. The image decoding method according to Claim 18,
wherein the specific color component is green.

20. The image decoding method according to Claim 14,
wherein in said superposed position determination step, a high-frequency component is extracted from the decoded image, and a region in which the extracted high-frequency component is greater than or equal to a predetermined value is determined as the position on which the high-definition component should be superposed.

21. The image decoding method according to Claim 14,
wherein in said high-definition component generation step, the high-definition component is generated using parameters of a pre-set function included in the additional information.

22. The image decoding method according to Claim 21,
wherein the function is a Gaussian distribution function.

23. An image encoding apparatus comprising:
an image encoding unit operable to encode an input image and generate first coded data along with a decoded image of the encoded image;
an extraction unit operable to extract a high-definition component included in the input image and position information of where the high-definition component exists within the input image; and
an additional information generation unit operable to generate additional information regarding the high-definition component, based on the high-definition component and the position information extracted by said extraction unit.

24. An image decoding apparatus comprising:
an image decoding unit operable to decode first coded data that is obtained when an image is encoded, and generate a decoded image;
an acquisition unit operable to acquire additional information regarding a high-definition component that corresponds to the decoded image;
a high-definition component generation unit operable to generate the high-definition component based on the additional information;
a superposed position determination unit operable to determine a position in the decoded image on which the high-definition component should be superposed, based on the decoded image or the additional information; and
a synthesis unit operable to superpose the high-definition component on the decoded image in the position determined by said superposed position determination unit.

25. A program which causes a computer to execute:
an image encoding step of encoding an input image and generating first coded data along with a decoded image of the encoded image;
an extraction step of extracting a high-definition component included in the input image and position information of where the high-definition component exists within the input image; and
an additional information generation step of generating additional information regarding the high-definition component, based on the high-definition component and the position information extracted in said extraction step.

26. A program which causes a computer to execute:
an image decoding step of decoding first coded data that is obtained when an image is encoded, and generating a decoded image;
an acquisition step of acquiring additional information regarding a high-definition component that corresponds to the decoded image;
a high-definition component generation step of generating the high-definition component based on the additional information;
a superposed position determination step of determining a position in the decoded image on which the high-definition component should be superposed, based on the decoded image or the additional information; and
a synthesis step of superposing the high-definition component on the decoded image in the position determined in said superposed position determination step.

27. An integrated circuit comprising:
an image encoding unit operable to encode an input image and generate first coded data along with a decoded image of the encoded image;
an extraction unit operable to extract a high-definition component included in the input image and position information of where the high-definition component exists within the input image; and
an additional information generation unit operable to generate additional information regarding the high-definition component, based on the high-definition component and the position information extracted by said extraction unit.

28. An integrated circuit comprising:
an image decoding unit operable to decode first coded data that is obtained when an image is encoded, and generate a decoded image;
an acquisition unit operable to acquire additional information regarding a high-definition component that corresponds to the decoded image;
a high-definition component generation unit operable to generate the high-definition component based on the additional information;
a superposed position determination unit operable to determine a position in the decoded image on which the high-definition component should be superposed, based on the decoded image or the additional information; and
a synthesis unit operable to superpose the high-definition component on the decoded image in the position determined by said superposed position determination unit.
